Europäisches Patentamt

European Patent Office

Office européen des brevets

(11) Veröffentlichungsnummer: **0 268 077**
**A1**

# (12) EUROPÄISCHE PATENTANMELDUNG

(21) Anmeldenummer: 87115061.1

(22) Anmeldetag: 15.10.87

(51) Int. Cl.⁴: **H01B 1/24** , C08J 9/00 , C08K 7/04 , //C08G61/12

(30) Priorität: 17.10.86 DE 3635362

(43) Veröffentlichungstag der Anmeldung:
25.05.88 Patentblatt 88/21

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)
Erfinder: Stutz, Herbert, Dr.
Im Eichbaeumle 8
D-7500 Karlsruhe 1(DE)

(54) Formkörper aus Schaumkunststoffen, die elektrisch leitfähige Werkstoffe enthalten.

(57) Die Erfindung betrifft Formkörper auf der Grundlage von Schaumkunststoffen, die einen elektrisch leitfähigen nichtmetallischen Werkstoff in kohärenter Phase enthalten.

EP 0 268 077 A1

## Formkörper aus Schaumkunststoffen, die elektrisch leitfähige Werkstoffe enthalten

Die Erfindung betrifft Formkörper auf der Grundlage von Schaumkunststoffen, die einen elektrisch leitfähigen Werkstoff enthalten, der einer kohärente Phase in dem Schaumkunststoff bildet.

Schaumkunststoffe, wie schaumförmiges Polystyrol oder schaumförmige Polyurethane werden in großen Umfang als Isolierstoffe verwendet. Für manche Anwendungsgebiete der Isolierstoffe hat es sich als nachteilig erwiesen, daß sich die Kunststoffe elektrisch aufladen können. Dies ist besonders problematisch, wenn die Schaumkunststoffe zur Isolierung von Fahrzeugen oder zur Isolierung von Räumen Verwendung finden, worin explodierbare Flüssigkeiten gelagert oder transportiert werden.

Es ist daher z.B. in der DE-OS 21 13 900 bereits vorgeschlagen worden, in den Schaumstoff Metallteilchen in Form von länglichen Elementen, wie von Fäden oder Fasern einzuschäumen, derart, daß in dem Schaumstoff eine kohärente leitfähige Phase ausgebildet wird. Nachteilig ist hierbei jedoch die Tatsache, daß Metalle mit dem Schaumkunststoff keine Bindung eingehen, so daß es zu einer Beeinträchtigung der Festigkeitseigenschaften des Schaumstoffes kommt.

Es war auch bereits in den älteren Patentanmeldungen P 33 27 01. (EP-A 84 108 455) sowie P 35 10 036 (EP-A 86 103 457) vorgeschlagen worden, in offenzellige Schaumstoffe aus thermoplastischen Kunststoffen elektrisch leitfähige Polymere in den Zellen abzulagern, so daß die Formkörper aus den Kunststoffen leitfähig werden. Diese Methode ist jedoch nur für offenzellige Schaumstoffe anwendbar, da die Ausgangsstoffe, aus denen sich die leitfähigen Polymeren bilden, in die geschlossenen Zellen von geschlossenzelligen Schaumstoffen nicht eindringen können. Es werden jedoch für thermische Isolierungen vorwiegend geschlossenzellige Schaumstoffe verwendet, so daß ein Bedürfnis bestand, geschlossenzellige Schaumstoffe leitfähig auszurüsten.

Aufgabenstellung der Erfindung ist es, Formkörper auf der Grundlage von Schaumkunststoffen zu schaffen, die einen elektisch leitfähigen Werkstoff enthalten, der eine kohärente Phase in den Schaumkunststoff bildet, mit besseren Eigenschaften als die bisher bekannten, sowie ein vorteilhafteres Verfahren zu dessen Herstellung.

Die Aufgabenstellung der Erfindung wird durch Formkörper gelöst, die einen nichtmetallischen elektrisch leitfähigen Werkstoff in Form von Fäden, Fasern oder flächigen Gebilden enthalten.

Es hat sich gezeigt, daß die Formkörper gemäß der Erfindung die gleichen Festigkeitseigenschaften behalten, wie die Ausgangsschaumkunststoffe.

Die neuen elektrisch leitfähigen Schaumkunststoffe zeigen Leitfähigkeiten, die reproduzierbar eingestellt werden können im Bereich von $10^{-4}$ bis 10 S/cm. Wichtig ist, daß bei Anlegen von elektrischer Spannung bis 200 Volt und Stromstärken bis 10 mA kein Ausbrennen von Leiterwegen erfolgt.

Zur Herstellung der erfindungsgemäßen Formkörper können alle Schaumkunststoffe Verwendung finden, z.B. Schaumstoffe mit offenen Zellen, die mit ihrer Umgebungsluft in Verbindung stehen. Besonders eignen sich Formkörper auf Basis geschlossenzelliger Schaumstoffe, wie auf Basis von Schaumpolystyrol, Schaumpolyurethan oder Schaumgummi. Die Schaumkunststoffe gehören zum Stand der Technik. Ausführungen über Schaumstoffe insbesondere Schaumkunststoffe finden sich in Römpps Chemie Lexikon, 7. Auflage, Seite 3082 bis 3083 sowie in der dort zitierten Primärliteratur.

Die elektrisch leitfähigen Werkstoffe, die in dem Schaumkunststoff als kohärente Phase enthalten sind, sollen nichtmetallisch sein. Vorteilhaft verwendet man organisch elektrisch leitfähige Polymere oder Kohlenstoff in Form von Fasern. Fäden oder flächigen Gebilden. Von den elektrisch leitfähigen Polymeren eignen sich insbesondere solche Polymere, die durch elektrochemische Polymerisation von Verbindungen aus der Klase der 5-gliedrigen heterocyclischen Verbindungen mit konjugierten $\pi$-Elektronensystem erhalten werden, die Stickstoff oder Schwefel als Heteroatom enthalten. Vorteilhaft sind Polymerisate aus der Klasse der Pyrrole und Thiophene. In Frage kommen auch substituierte Pyrrole, wie n-Alkylpyrrole oder Monoalkyle oder Dihalogen substituierte Pyrrole. Verbindungen aus der Klasse der Thiophene sind neben Thiophene selbst das 2-, oder das 3-, Methylthiophen oder das 2,3-Diethylthiophen. Die Verbindungen können auch zusammen mit anderen copolymerisierbaren Verbindungen wie Imidazol oder Azulen copolymerisiert werden. Die Herstellung der Polymerisate erfolgt nach den bekannten Verfahren (z.B. nach EP 99 984) durch anodische Oxydation in einem Elektrolytlösungsmittel das Leitsalze enthält. Man erhält Polymerisate, worin die Leitsalzanionen gebunden sind, man spricht von p-dotierten leitfähigen Polymeren.

Auf gleicher Weise lassen sich die Polymeren des Acetylens herstellen. Die Herstellungsweise ist z.B. in US-PS 4 204 216 und US-PS 4 222 903 beschrieben. Vorteilhaft sind solche Acetylenpolymere, die in EP 88 301 bzw. im Synthetic Metals 5 (1982) S. 51 beschrieben sind. Besonders geeignet sind gereckte Polymere. Außerdem eignen sich elektrisch leitfähige Polymere, wie Poly-p-phenylene.

Die elektrisch leitfähigen Polymeren sind z.B. mit Leitsalzanionen wie $I_3^-$, $O\text{-}SO_3^-$, $ClO_4^-$, $AsF_6^-$-p-dotiert oder mit $Li^+$, $Na^+$, $K^+$ oder Erdalkalikationen n-dotiert. Die Dotierung nach bekannten Verfahren kann elektrochemisch oder chemisch erfolgen.

Als nichtmetallische elektrisch leitfähige Werkstoffe können aber auch Kohlenstoff-Fasern oder -Fäden oder flächige Gebilde daraus Verwendung finden. Solche Kohlenstoff-Fasern können beispielsweise durch pyrrolytische Verfahren aus Polyacrylnitril oder durch Tempern von Fäden oder Geweben aus Polyestern hergestellt werden. Es können aber auch Gewebe, Gewirke, Geflechte oder Netze oder faservliesartige Stoffe aus Kohlenstoff-Fasern Verwendung finden. Vorteilhaft verwendet man solche Kohlenstoff-Fasern oder -Fäden, deren Oberfläche mit leitfähigen Schichten, z.B. aus elektrisch leitfähigen Polymeren der oben genannten Art überzogen sind. Hierdurch wird eine bessere Haftung der leitfähigen kohärenten Fasern mit dem Schaumkunststoff bewirkt.

Bei der Herstellung der erfindungsgemäßen Formkörper ist dafür Sorge zu tragen, daß der elektrisch leitfähige nichtmetallische Werkstoff eine kohärente Phase bildet. D.h., daß die Anteile des leitfähigen Werkstoffs untereinander in Berührung stehen, so daß eine Leitung elektrischen Stromes möglich ist. Kohärente Phasen bilden z.B. Folien, Fasern oder Drähte, es können aber auch Gewirke, Gewebe oder geschüttete Schichten aus den faserigen leitfähigen Werkstoff in den Schaumkunststoff eingelagert sein. So ist es beispielsweise möglich, Formkörper herzustellen, die den elektrisch leitfähigen, nichtmetallischen Schaumstoff in Form einer Folie oder eines anderen flächigen Gebildes eingelagert enthalten. Es können aber auch zwei mehrere Schichten im Abstand voneinander in den Schaumkunststoff eingebaut sein.

Die Herstellungsbedingungen richten sich je nach dem zu verwendenden Schaumkunststoff. Der Anteil an elektrisch leitfähigem Werkstoff im Formkörper soll bezogen auf 100 Gew.-Teile Schaumkunststoff 1 bis 25, vorteilhaft von 3 bis 18 Gew.-Teile des elektrisch leitfähig ausgerüsteten Werkstoffs sein.

Die elektrisch leitfähigen Werkstoffe haben zweckmäßig Ausdehnungen zwischen 0,1 und 1000 mm, im Falle von Fäden, Fasern oder Flocken ist die Längsausdehnung ein 2 bis 10 000-faches des Durchmessers der Querausdehnung. Folien oder andere Flächige Gebilde sollen eine Dicke von 10 bis 10 000 mm haben.

Die Formkörper werden nach den bekannten Verfahren, wie sie bei der Schaumkunststoffherstellung gebräuchlich sind, erhalten. So werden z.B. für die Herstellung von Formkörpern auf der Basis von geschäumten Polystyrolen die expandierbaren Polystyrolteilchen zunächst vorgeschäumt. Dann werden die vorgeschäumten Teilchen mit dem elektrisch leitfähigen Werkstoff gemischt, in Formen eingebracht und ausgeschäumt. Solche Verfahren werden z.B. in dem Buch von Homan "Kunststoffschaumstoffe" beschrieben, die in Hansa-Verlag, 1966 erschienen ist. Weitere Hinweise finden sich im Römpp-Chemie Lexikon an den oben zitierten Stellen in der dort genannten Primärliteratur. Zur Herstellung von Formkörpern aus geschlossenzelligen Polyurethanschaumstoffen werden die aufschäumbaren Komponenten zusammen mit den elektrisch leitfähigen Werkstoffen gemischt, in Formen eingebracht und dort aufgeschäumt. Es ist in diesem Fall zweckmäßig, feinteilige leitfähige Werkstoffe in form von Fäden, Fasern oder Flocken zu verwenden, da diese beim Aufschäumen sich gleichmäßig im Polyurethanschaumstoff verteilen und eine kohärente Phase bilden. Besonders vorteilhaft kann man die erfindungsgemäßen Formkörper z.B. Bahnen oder Folien oder Platten durch Extrusion von aufschäumbaren Mischungen aus thermoplastischen Kunststoffen, die den elektrisch leitfähigen Werkstoff in feinteiliger Form enthalten, herstellen. Auf diese Weise lassen sich z.B. Schaumpolyethylenbahnen oder Schaumgummibahnen erhalten.

Es hat sich gezeigt, daß die Formkörper aufgrund der eingelagerten elektrisch leitfähigen Phase eine nur gering verringerte Isolierfähigkeit haben, sich jedoch dadurch auszeichnen, daß sie sich nicht elektrisch aufladen. Aufgrund dieser Gegebenheiten können die Schaumstoff-Formkörper zur Isolierung in Räumen, Fahrzeugen dienen, z.B. von Flugzeuginnenräumen oder von Tankzügen, die explosionsgeschützt ausgerüstet sein müssen.

Vorteilhaft ist die gleichmäßige Verteilung der elektrisch leitfähigen Verbindung in Schaumstoff, ohne Sedimentation oder Anreicherung entsprechend dem spezifischen Gewicht oder an bestimmten, bevorzugten Phasengrenzflächen.

Beispiel 1

Es werden 45 Teile eines aromatischen Polyesterols (OH-Zahl 250, Funktionalität 2,0) mit 40 Teilen eines anderes Polyesterols sowie 3,5 Teilen Glycerin und 1,5 Teilen eines Silikonöls gemischt. Dieser Mischung werden 4 Teile eines Aminkatalysators und 32 Teile Trichlorfluormethan zugesetzt. Danach wird die homogene Masse gerührt und es werden 200 Teile eines Gemisches im Verhältnis 1:1 von Diphenylmethandiisocyanat und Polyphenylpolymethylenpolyisocyanat zugefügt. Die homogene Masse wird auf ein Gewebe aus Kohlenstoff-Fasern, die mit Polypyrrol beschichtet wurden, gegossen und es wird eine weitere Gewebeschicht aus Kohlenstoff-Fasern, die mit Polypyrrol beschichtet sind, auf das Polyolpolyisocyanatgemisch gedeckt, so daß ein Formkörper mit Sandwich-Struktur entsteht. Nach einer Abbindezeit von 70 Sekunden erhält man eine Sandwich-Struktur. Die elektrische Leitfähigkeit dieses Systems ist 15 S/cm. Die Dichte des Schaumes beträgt 45 g/l.

Beispiel 2

Es wird wie im Beispiel 1 gearbeitet und jeweils das Polyisocyanatgemisch auf Schichten aus Kohlenstoff-Faserngeweben aufgebracht, die mit Polypyrrol beschichtet sind, derart, daß eine Struktur entsteht, worin zwischen 5 Gewebeflächen die Polyurethanschaumstaffstrukturen eingebettet sind. Der Schaumstoff hat eine Leitfähigkeit von 30 S/cm und eine Dichte von 25 g/l.

Beispiel 3

Entsprechend der Arbeitsweise, wie sie in Ullmanns Encyklopädie Band 15, Seite 356 beschrieben ist, wird ein Kautschuklatexschaum hergestellt, der auf ein Nylongewebe, das Polypyrrol beschichtet ist, aufgebracht wird. Das Gewebe mit dem Latex wird in eine vorgewärmte Metallform eingebracht und bei 110°C ausgehärtet.

Auf die Seite der Struktur, die mit dem nylongewebe beschichtet ist, wird erneut Latexschaum aufgebracht, der anschließend weiter ausgehärtet wird. Es wird ein Schichtstoff erhalten aus Latexschaum, worin ein leitfähiges Gewebe eingebettet ist. Die Leitfähigkeit des modifizierten Schaumstoffes beträgt 10 S/cm.

Beispiel 4

Es wird wie in Beispiel 3 gearbeitet, jedoch anstelle des Nylongewebes ein Polypyrrolfilm einer Dicke von 100 µm eingebettet. Es wird ein Schaumstoff erhalten, der eine Leitfähigkeit von 80 S/cm hat.

Beispiel 5

Es wird wie in Beispiel 4 gearbeitet, jedoch dem Latex 50 Teile eines Polypyrrolpulvers zugefügt. Der Schaum, der mit Polypyrrolpulver angereichert ist, wird auf eine Polystyrolfolie gestrichen und anschließend jeweils mit einer Polypyrrolfolie abgedeckt, so daß eine Struktur entsteht, worin 5 Schichten Schaum mit 7 Polypyrrolfilmen abgedeckt sind.

Nach dem Aushärten wird eine Schaumstruktur erhalten, die eine Leitfähigkeit von 100 S/cm hat.

**Ansprüche**

1. Formkörper auf der Grundlage von Schaumkunststoffen, die einen elektrisch leitfähigen Werkstoff enthalten, der eine kohärente Phase in dem Schaumkunststoff bildet, dadurch gekennzeichnet, daß der Formkörper einen nichtmetallischen, elektrisch leitfähigen Werkstoff in Form von Fäden, Fasern oder flächigen Gebilden enthält.

2. Formkörper nach Anspruch 1, dadurch gekennzeichnet, daß der Schaumstoff bezogen auf 100 Gewichtsteile 1 bis 25 Gewichtsteile des nichtmetallischen elektrisch leitfähigen Werkstoffs enthält.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 406 126  (I. LITANT) <br> * Ansprüche 1,2,4; Spalte 4, Zeilen 66-70 * <br> --- | 1,2 | H 01 B    1/24 <br> C 08 J    9/00 <br> C 08 K    7/04 // <br> C 08 G   61/12 |
| A | US-A-4 073 840  (G.E.W. SAIDLA) <br> * Ansprüche 1,4; Spalte 2, Zeilen 53-55 * <br> --- | 1,2 | |
| A | GB-A-1 297 585  (D.E. MOORES) <br> * Insgesamt * <br> --- | 1,2 | |
| A,D | EP-A-0 195 381  (BASF AG) <br> * Ansprüche 1-4; Beispiel 1 * <br> --- | 1,2 | |
| A | US-A-4 572 917  (D. GRAIVER) <br> * Ansprüche 1,7; Spalte 2, Zeilen 46-48; Spalte 3, Zeilen 31-38 * <br> ----- | 1,2 | |

RECHERCHIERTE
SACHGEBIETE (Int. Cl.4)

C 08 J
H 01 B

Der vorliegende Recherchenbericht wurde für alle Patentansprüche erstellt

| Recherchenort | Abschlußdatum der Recherche | Prüfer |
|---|---|---|
| DEN HAAG | 22-01-1988 | BETTELS B.R. |